(19) **Europäisches Patentamt**

**European Patent Office**

**Office européen des brevets**

(11) **EP 0 890 630 B1**

(12) **EUROPEAN PATENT SPECIFICATION**

(45) Date of publication and mention
of the grant of the patent:
**21.04.2004 Bulletin 2004/17**

(51) Int Cl.[7]: **C10K 3/00**, B01D 53/62

(21) Application number: **98202020.8**

(22) Date of filing: **16.06.1998**

(54) **Method for cooling polluted gas**

Verfahren zum Abkühlen von verschmutztem Gas

Procédé de refroidissement d'un gaz pollué

(84) Designated Contracting States:
**AT BE CH CY DE DK ES FI FR GB GR IE IT LI LU MC NL PT SE**
Designated Extension States:
**SI**

(30) Priority: **23.06.1997 NL 1006379**

(43) Date of publication of application:
**13.01.1999 Bulletin 1999/02**

(73) Proprietor: **Droan B.V.**
**3281 LB Numansdorp (NL)**

(72) Inventor: **Hazewinkel, Jakob Hendrik Obbo**
**2723 BG Zoetermeer (NL)**

(74) Representative: **van Westenbrugge, Andries et al**
**Nederlandsch Octrooibureau**
**P.O. Box 29720**
**2502 LS The Hague (NL)**

(56) References cited:
**EP-A- 0 175 406**      **GB-A- 1 053 788**
**US-A- 4 704 137**

• **PASCAL ET AL: "Nouveau traité de chimie minérale (tome viii)" 1968 , MASSON ET CIE. , PARIS XP002056001 001467 \* page 595 - page 596 \***

**Description**

The invention relates to a method for cooling polluted gas, in particular fuel gas that is obtained on treating waste.

Waste can be treated in various ways. Treatment by combustion is widely used at present. Other possibilities are pyrolysis and gasification, both of which can also be followed by a melting step. In the case of pyrolysis the waste is heated under (virtually) oxygen-free conditions, gases and a coke-like residue being produced. Higher molecular weight constituents can be removed from the resulting gas by thermal cracking. A mixture of $CO$, $CO_2$, $H_2O$ and $H_2$ is produced during this operation. In the case of gasification more oxygen is supplied, with the result that it is mainly CO that is produced and less coke-like residue is formed. The residue can be further reacted by means of a melting step, the residue being converted into a usable slag and a fly substance that contains the volatile metal/metal compounds. The pyrolysis and gasification processes yield, as product gas, a fuel gas that still has a calorific value. The same is true of the off-gas from the melting step, at least if the latter is operated under reducing conditions.

In general the gases are obtained from the processes described above at temperatures above 1 000 °C, in particular at temperatures of 1 250 - 1 600 °C. The gases are polluted with material entrained from the feed ("entrainment") and also contain gaseous compounds originating from the feed, such as hydrogen chloride gas, hydrogen sulphide and metal vapours (in particular zinc and, to a somewhat lesser extent, lead).

The consequence of the presence of such impurities is that problems can arise during the further processing of this gas. In the existing processes for purifying melt gas and pyrolysis gas the gas is usually fed successively through a gas cooler, a cyclone and/or bag filter to capture solids and a gas scrubber to remove the acid constituents from the gas. Contamination of the equipment for carrying out these processing steps, as a consequence of the pollutants present in the hot gas, is then a problem, in particular in caking of the material and certainly on cooling. As far as the cooling step is concerned, cooling using the conventional means could lead to the metal vapour present precipitating as elementary metal. Said elementary metal would then be filtered off in the filters. This can lead to the occurrence of filter fires as soon as oxygen (air) is admitted: the metals will oxidise immediately, a great deal of heat being generated. In addition, because of the high temperature of the gases, heat exchange can take place only in very expensive heat exchangers made of ceramic material. Such heat exchangers are subject to wear and are relatively rapidly contaminated by the polluted hot gas streams, as a result of which they are highly maintenance-intensive.

The aim of the present invention is to provide a solution to the above problems. A further aim of the invention is to provide a method with which the very hot and polluted gas can be cooled efficiently, so that heat exchange can take place in steel equipment. The use of steel heat exchangers has the advantages that it is less expensive and that the heat exchanger wears less rapidly and becomes contaminated less rapidly. It is known that the use of steel heat exchangers is possible only at temperatures below 1 000 °C. The hot gas streams must therefore be cooled to a temperature below 1 000 °C before they can be fed through a steel heat exchanger. A further aim of the invention is to provide a method with which the gas obtained retains an appreciable calorific value, so that it is suitable for use as fuel gas.

It has been found that by making use of the shift reaction the hot gas streams can be effectively and rapidly cooled, the gas obtained possessing an appreciable calorific value.

The invention therefore relates to a method for cooling polluted, carbon monoxide-containing gas, which contains as impurities at least metal vapours and hydrogen sulphide and is at a temperature of above 1 000 °C, to a temperature between 700 and 1 000 °C, by supplying water in liquid and/or gaseous form to said gas, and wherein at least some of the carbon monoxide present in the gas is able to react with the water supplied, with the formation of carbon dioxide and hydrogen.

By supplying water at a lower temperature to the hot gas, the mixture is cooled and the shift reaction takes place:

$$CO + H_2O <=> CO_2 + H_2$$

As a result of the fall in the temperature and the changed chemical conditions, the metal vapours present in the gas will be converted into solid compounds, usually into sulphates and sulphides because of the presence of hydrogen sulphide. As a result these metals can be readily removed further in the process and processing also presents fewer problems. Furthermore, hydrogen is formed as a result of the shift reaction taking place, which is advantageous, since hydrogen has a higher value than carbon monoxide and is also easier to use.

The water can be supplied in either the liquid or gaseous (as steam) state.

The amount of water supplied has an effect on the degree to which cooling is achieved. In any event the quantity of water added must be such that the temperature of the hot gas falls to below 1 000 °C. In addition, it is preferable that the temperature of the gas does not fall below 700 °C, because otherwise too much heat would be lost, which would also make heat exchange less cost-effective. It is most preferable to supply a quantity of water such that the temperature of the cooled gas is between 900 and 1 000 °C. At temperatures in this range the rate of reaction of the shift reaction will be so high that the new equilibrium is established with residence times of less than one second. On further addition of water, the temperature will fall further, but the shift reaction will not proceed much further. The consequence is that a metastable equilibrium is produced: the shift reaction is in a sort of frozen equilibrium situation.

As has already been stated above, the method according to the invention is in particular suitable for cooling polluted gases that have been obtained by gasification or pyrolysis of waste or off-gases which are obtained from a melting step, in which the coke-like residue that is obtained from the pyrolysis or gasification is melted under reducing conditions. The method according to the invention is in particular suitable for cooling polluted gas that has been obtained by the partial combustion or gasification of biomass, pyrolysis coke or waste with a high content of organic material.

Furthermore it is also possible with the aid of the method according to the invention to adjust the $H_2$/CO ratio in the gas obtained or to keep this ratio virtually constant. The metals in the gas are also converted to metal oxides or metal sulphides.

The invention is further illustrated with reference to the following examples.

Example 1

A gasifier supplies gas at a temperature of approximately 1 450 °C, which contains the following gaseous constituents:

CO:48.2 %mol zinc vapour:200 ppm
$CO_2$:11.8 %mol $H_2$S:1400 ppm
$H_2$:19.3 %mol HCl:1000 ppm
$H_2$O:15.7 %mol
$N_2$:5.0 %mol

In addition, the gas also contains 3.5 g/m$^3$ solid constituents as well as small amounts of other gaseous constituents.

0.3 mol water at 25 °C is added to this gas per mol gas (which corresponds to 23 % on a weight basis). This results in an adiabatic equilibrium temperature of 948 °C. The gas composition in this equilibrium situation is as follows:

CO:27.0 %mol
$CO_2$:19.2 %mol
$H_2$:25.0 %mol
$H_2$O:25.0 %mol
$N_2$:3.8 %mol

At the equilibrium temperature of 948 °C finally reached, all the zinc vapour originally present has been converted to zinc sulphide.

It can be seen from the above compositions that the hydrogen content has increased appreciably as a consequence of the addition of water. The calorific value of the gas obtained (after the water has been condensed out of this) is 51.4 Mcal/mol, which is a value that is very readily usable.

Example 2

The same gas as used in Example 1 is now cooled with steam at 150 °C instead of with water. 0.35 mol steam is added per mol gas. The final temperature is 928 °C. The composition of the gas at this temperature is as follows:

CO:25.1 %mol
$CO_2$:19.3 %mol
$H_2$:24.9 %mol
$H_2$O:27.0 %mol
$N_2$:3.7 %mol

Here again at the equilibrium temperature of 928 °C finally reached all of the zinc vapour originally present has been converted to zinc sulphide.

It can also be seen from the above compositions that the hydrogen content has increased as a consequence of the addition of water.

## Claims

1. Method for cooling polluted, carbon monoxide-containing gas, which contains as impurities at least metal vapours and hydrogen sulphide and is at a temperature of above 1 000 °C, to a temperature between 700 and 1000 °C, by supplying water in liquid and/or gaseous form to said gas, and wherein at least some of the carbon monoxide present in the gas reacts with the water supplied, with the formation of carbon dioxide and hydrogen.

2. Method according to claim 1, wherein the gas is cooled to a temperature between 900-1000 °C.

3. Method according to claims 1 or 2, wherein the polluted gas has been obtained by the gasification of biomass, pyrolysis coke or waste with a high content of organic material.

4. Method according to one or more of claims 1-3, wherein the $H_2$/CO ratio in the gas is kept virtually constant.

## Patentansprüche

1. Verfahren zum Kühlen von verschmutztem, Kohlenmonoxid enthaltendem Gas, welches als Verunreinigungen zumindest Metalldämpfe und Schwefelwasserstoff enthält und eine Temperatur von mehr als 1000 °C aufweist, auf eine Temperatur zwischen 700 und 1000 °C, wobei dem Gas Wasser in flüssiger und/oder gasförmiger Form zugeführt wird, und wobei mindestens ein Teil des im Gas vorhandenen Kohlenmonoxids mit dem zugeführten Wasser unter Bildung von Kohlendioxid und Wasserstoff reagiert.

2. Verfahren nach Anspruch 1, **dadurch gekennzeichnet, dass** das Gas auf eine Temperatur zwischen 900-1000 °C abgekühlt wird.

3. Verfahren nach Anspruch 1 oder 2, **dadurch gekennzeichnet, dass** das verschmutzte Gas durch Vergasung von Biomasse, Pyrolysekoks oder Abfall welche einen hohen Gehalt an organischem Material aufweisen, entstanden ist.

4. Verfahren nach einem oder mehreren der Ansprüche 1 bis 3, **dadurch gekennzeichnet, dass** das $H_2$/CO Verhältnis im Gas im Wesentlichen konstant gehalten wird.

**Revendications**

1. Procédé de refroidissement d'un gaz pollué contenant du monoxyde de carbone ainsi que des impuretés sous forme de vapeurs de métal et d'hydrogène sulfuré et ayant une température supérieure à 1000 °C à une température comprise entre 700 et 1000 °C par apport d'eau sous sa forme liquide et/ou gazeuse et où au moins une partie du monoxyde de carbone contenu dans le gaz réagit avec l'eau pour former du dioxyde de carbone et de l'hydrogène.

2. Procédé selon la revendication 1, **caractérisé en ce que** le gaz est refroidi à une température comprise entre 900 et 1000 °C.

3. Procédé selon la revendication 1 ou 2, **caractérisé en ce que** le gaz pollué provient de la gazéification de biomasse, de coke de pyrolyse ou de déchets ayant une teneur importante en matière organique.

4. Procédé selon une ou plusieurs des revendications 1 à 3, **caractérisé en ce que** le rapport $H_2$/CO dans le gaz est maintenu sensiblement constant.